Europäisches Patentamt

European Patent Office

Office européen des brevets

(19)

(11) Numéro de publication: **0 149 934**
**B1**

(12) **FASCICULE DE BREVET EUROPEEN**

(45) Date de publication du fascicule du brevet:
28.01.87

(51) Int. Cl.⁴: **B 60 R 9/04**

(21) Numéro de dépôt: 84402444.8

(22) Date de dépôt: 29.11.84

(54) **Porte-bagages pour véhicule automobile.**

(30) Priorité: 23.12.83 FR 8320979

(43) Date de publication de la demande:
31.07.85 Bulletin 85/31

(45) Mention de la délivrance du brevet:
28.01.87 Bulletin 87/5

(84) Etats contractants désignés:
**DE GB IT**

(56) Documents cités:
**GB - A - 956 469**
**US - A - 3 181 753**
**US - A - 3 237 823**

(73) Titulaire: **AUTOMOBILES CITROEN, 62 Boulevard Victor-Hugo, F-92200 Neuilly-sur-Seine (FR)**
Titulaire: **AUTOMOBILES PEUGEOT, 75, avenue de la Grande Armée, F-75116 Paris (FR)**

(72) Inventeur: **Quinet, Jean-Claude, 2, rue de Chateaubourg, F-91370 Verrieres-le-Buisson (FR)**

(74) Mandataire: **Boivin, Claude, 9, rue Edouard-Charton, F-78000 Versailles (FR)**

ACTORUM AG

## Description

Les galeries de toit pour véhicules automobiles sont robustes et ont une grande capacité de chargement; mais elles sont lourdes, encombrantes et peu faciles à manipuler.

On connaît par ailleur, des porte-bagages pour toitures de véhicules dits «porte-tout» et constitués par de simples barres. Ces porte-bagages sont légers et peuvent facilement être rangés à l'intérieur du véhicule quand ils ne sont pas utilisés. Mais leur capacité de chargement est faible.

Le document GB-A-956 469 décrit un portebagages qui est formé de deux unités séparées identiques qui comportent chacune un élément ayant en plan une forme sensiblement rectangulaire. Ce porte-bagages est relativement léger et peu encombrant, tout en présentant une capacité de chargement de même ordre que celle d'une galerie de toit classique. Mais sa fixation sur le toit du véhicule nécessite deux entretoises transversales annulaires.

La présente invention a pour objet un portebagages de ce type qui présente l'avantage de ne pas nécessiter d'entretoise pour sa fixation et dont la forme est aussi plus simple et plus légère.

Ce porte-bagages est caractérisé en ce que les côtés courts opposés de l'élément rectangulaire sont munis de moyens de fixation sur le toit, et en ce que ses côtés longs opposés sont reliés aux côtés courts par des portions de raccordement cintrées ou cambrées dans le plan vertical, de manière à être surélevés par rapport au plan défini par les côtés courts, les cambrures des portions étant différentes pour les deux côtés longs de sorte que la surélévation de l'un de ces côtés soit supérieure à celle de l'autre.

Ces unités sont fixées sur le toit d'un véhicule de façon que le côté long qui est le plus surélevé, soit extérieur par rapport à l'autre. Ce côté forme ainsi une rambarde latérale d'arrêt alors que l'autre côté long détermine un plan d'appui pour les charges mises en place.

Les deux unités peuvent éventuellement être reliées l'une à l'autre par deux traverses d'extrémités amovibles, surélevées et parallèles.

On a décrit ci-après, à titre d'exemple non limitatif, un mode de réalisation du porte-bagages selon l'invention, avec référence au dessin annexé dans lequel:

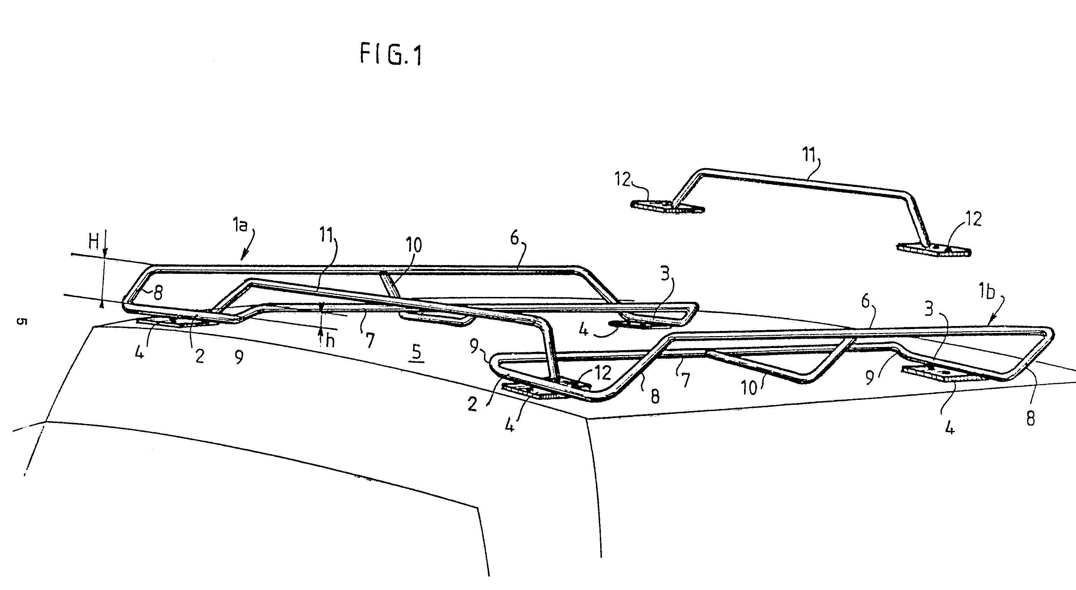

la figure 1 est une vue en perspective de l'ensemble du porte-bagages, l'une des rambarde d'extrémité étant montrée séparée;

la figure 2 en est une vue latérale;

la figure 3 montre en plan l'une des unités latérales;

la figure 4 est une vue avant du porte-bagages.

Tel qu'il est représenté au dessin, le porte-bagages selon l'invention est formé de deux unités séparées identiques 1 a et 1 b.

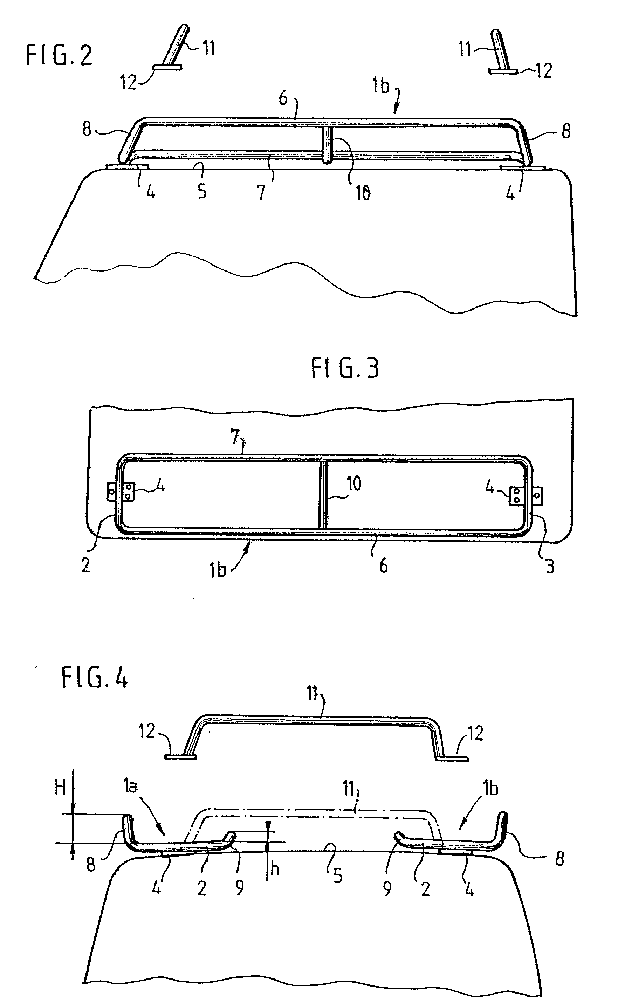

Chacune de ces unités est constituée par un anneau fermé qui a en plan une forme sensiblement rectangulaire (voir figure 3). Ses côtés courts 2 et 3 sont munis de moyens 4, constitués par exemple par des semelles, propres à les fixer sur le toit 5 d'un véhicule et sont reliées aux côtés longs 6 et 7 par des raccordements 8 et 9 cintrés dans des plans verticaux de sorte que ces côtés longs sont surélevés par rapport au plan de base défini par les côtés courts. Les cintrages des raccordements 8 et 9 sont différents de façon que la surélévation $H$ du côté long extérieur 6 soit supérieure à la surélévation $h$ du côté long intérieur 7. Une ou plusieurs entretoises 10, de forme analogue à celle des côtés courts 2 et 3, relient les côtés longs 6 et 7.

Lorsque les deux unités 1 a et 1 b sont fixées sur le toit 5, les côtés longs 6 forment rambardes latérales alors que les côtés longs 7 constituent des appuis pour les charges placées sur le toit.

Le porte-bagages peut éventuellement comporter deux traverses d'extrémité 11 qui sont pliées sensiblement en $U$ et dont les extrémités sont munies de semelles 12 pouvant être fixées sur les semelles 4. Ces traverses, qui sont alors parallèles et montées entre les unités latérales 1, forment rambardes avant et arrière.

Les unités 1 et les rambardes 11 sont de préférence constituées de profilés tubulaires cintrés.

On voit de la description qui précède, que le porte-bagages selon l'invention est très peu encombrant quand il n'est pas monté sur le toit du véhicule. En effet, les deux unités 1 se superposent de sorte que l'encombrement total est pratiquement celui d'une seule unité; le porte-bagages peut ainsi très facilement être rangé à l'intérieur du véhicule. La manutention est aisée étant donné son fractionnement. Il est très souple d'utilisation, une seule unité pouvant, en effet, être fixée sur l'un des côtés du toit du véhicule pour le transport d'objets longs tels que des skis, ou des cannes à pêche.

## Revendications

1. Porte-bagages pour toiture de véhicule formé de deux unités séparées identiques (1 a et 1 b) qui comportent chacune un élément annulaire périphérique ayant en plan une forme sensiblement rectangulaire, caractérisé en ce que les côtés courts opposés (2 et 3) de l'élément rectangulaire sont munis de moyens de fixation (4) sur le toit, et en ce que ses côtés longs opposés (6 et 7) sont reliés aux côtés courts par des portions de raccordement (8 et 9) cintrées ou cambrées dans le plan vertical, de manière à être surélevées par rapport au plan défini par les côtés courts, les cambrures des portions (8 et 9) étant différentes pour les deux côtés longs, de sorte que la surélévation de l'un de ces côtés soit supérieure à celle de l'autre.

2. Porte-bagages selon la revendication 1, caractérisé en ce que les deux unités (1 a et 1 b) sont reliées l'une à l'autre par deux traverses d'extrémité amovibles (11), surélevées et parallèles.

3. Porte-bagages selon la revendication 2, caractérisé en ce que les deux traverses d'extrémité (11) sont fixées sur les moyens de fixation (4) des côtés courts (2 et 3) des unités annulaires.

4. Porte-bagages selon l'une des revendications précédentes, caractérisé en ce que chaque unité annulaire (1*a* et 1*b*) comporte une ou plusieurs entretoises transversales (10).

5. Porte-bagages selon l'une des revendications 1 à 4, caractérisé en ce que les moyens de fixation (4) sont constitués par des semelles ou platines.

## Patentansprüche

1. Gepäckträger für Fahrzeugdächer, bestehend aus zwei getrennten identischen Einheiten (1*a* und 1*b*), von denen jede in seinem Umfang geschlossenes Element umfasst, das in der Draufsicht eine im wesentlichen rechteckige Form hat, dadurch gekennzeichnet, dass die sich gegenüberliegenden kurzen Seiten (2 und 3) des rechteckigen Elementes mit Befestigungsorganen (4) zur Befestigung auf dem Dach versehen sind, und dass die sich gegenüberliegenden Längsseiten (6 und 7) mit den kurzen Seiten durch in die vertikale Ebene gebogene bzw. gewölbte Anschlussstücke (8 und 9) verbunden sind derart, dass die Längsseiten relativ zu der durch die kürzeren Seiten definierten Ebene höher liegen, und dass die Krümmungen der Abschnitte (8 und 9) für die beiden Längsseiten unterschiedlich sind, derart, dass die Überhöhung einer dieser Seiten grösser ist als diejenige der anderen Seite.

2. Gepäckträger nach Anspruch 1, dadurch gekennzeichnet, dass die beiden Einheiten (1*a* und 1*b*) miteinander durch zwei ablösbare höherliegende und parallele Endtraversen (11) verbunden sind.

3. Gepäckträger nach Anspruch 2, dadurch gekennzeichnet, dass die beiden Endtraversen (11) auf den Befestigungselementen (4) der kürzeren Seiten (2 und 3) der umlaufenden Einheiten befestigt sind.

4. Gepäckträger nach einem der vorhergehenden Ansprüche, dadurch gekennzeichnet, dass jede umlaufende Einheit (1*a* oder 1*b*) einer oder mehrere Querstreben aufweist.

5. Gepäckträger nach einem der Ansprüche 1 bis 4, dadurch gekennzeichnet, dass die Befestigungselemente (4) durch Fussplatten oder Platinen gebildet sind.

## Claims

1. A luggage carrier for a vehicle roof formed of two separate identical units (1a and 1b) which each have an annular peripheral element having a substantially rectangular shape when seen in a plane view, characterized in that the short opposite sides (2 and 3) of the rectangular element are provided with means (4) for fixing to the roof, and in that its opposite long sides (6 and 7) are connected to the short sides by connecting portions (8 and 9) bent or curved in the vertical plane, so as to be raised up with respect to the plane defined by the short sides, the curves of the portions (8 and 9) being different for the two long sides, so that one of these sides is raised higher than the other.

2. Luggage rack according to claim 1, characterized in that the two units (1a and 1b) are connected to each other by two removable, raised and parallel end cross pieces.

3. Luggage rack according to claim 2, characterized in that the two end cross pieces (11) are fixed to the fixing means (4) of the short sides (2 and 3) of the annular units.

4. Luggage rack according to one of the preceding claims, characterized in that each annular unit (1a or 1b) includes one or more transverse spacers (10).

5. Luggage rack according to one of claims 1 to 4, characterized in that the fixing means (4) are formed by sole pieces or plates.

FIG.1

FIG.2

FIG.3

FIG.4